# EUROPÄISCHE PATENTSCHRIFT

(11) **EP 1 980 506 B1**
(45) Veröffentlichungstag und Bekanntmachung des Hinweises auf die Patenterteilung: **27.07.2011**
(21) Anmeldenummer: 08007092.3
(22) Anmeldetag: 10.04.2008
(51) Int. Cl.: B65G 25/06

(54) **Rundholzstufenschieber**
Log step feeder
Transporteur pas à pas pour bois rond

(30) Priorität: 12.04.2007 DE 102007017626
(43) Veröffentlichungstag der Anmeldung: 15.10.2008
(73) Patentinhaber: Holtec GmbH & Co.KG, 53940 Hellenthal (DE)
(72) Erfinder: Gebele, Alexander, 53879 Euskirchen (DE); Pützer, Alfred, 53940 Hellenthal (DE)
(74) Vertreter: Gerstein, Hans Joachim

(56) Entgegenhaltungen:
- CA-A1- 2 307 401
- US-A- 5 374 157

## Beschreibung

Die Erfindung betrifft einen Rundholzstufenschieber mit einer ersten Stufenförderanordnung, die eine Mehrzahl parallel zueinander angeordnete Treppenelemente mit einer Treppenabsätze aufweisenden Rundholzaufnahmefläche hat, mit einer zweiten Stufenförderanordnung, die eine Mehrzahl parallel zueinander angeordnete Treppenelemente mit einer Treppenabsätze aufweisenden Rundholzaufnahmefläche hat, wobei die erste und zweite Stufenförderanordnung relativ zueinander beweglich gelagert ist und mit einer mit den Treppenelementen der Stufenförderanordnungen über einen Kurbeltrieb gekoppelten Antriebseinheit zur Hin- und Herbewegung der Treppenelemente derart, dass auf den Treppenabsätzen parallel angeordneter Treppenelemente liegendes Rundholz quer zur Längsachse des Rundholzes befördert wird, wobei Treppenelemente der ersten und zweiten Stufenförderanordnung jeweils auf einer schwenkbar gelagerten Schwinge über ein Verbindungselement mit dem Kurbeltrieb der Antriebseinheit gekoppelt sind.

Derartige Rundholzstufenschieber sind an sich hinreichend bekannt.

In dem US-Patent 5,257,688 A ist ein solcher Rundholzstufenschieber zur Querförderung von Rundholz beschrieben, bei dem der Antrieb der Stufen aufweisenden Treppenelemente über einen Hubzylinder erfolgt. Der Hubzylinder ist mit einem als Vorschubanordnung dienenden und Stufen aufweisenden Treppenelement verbunden. Durch die Bewegung des Hubzylinders werden die Stufen des Treppenelementes relativ zu einer zweiten, feststehenden Stufenanordnung verschoben.

Die Lagerung der Treppenelemente erfolgt auf Rollen. Dies führt zu einem erhöhten Verschleiß.

Auch die CA 1,277,682 offenbart einen ähnlichen Rundholzstufenschieber, bei dem die Stufenanordnungen gegeneinander mit Hilfe eines Hubzylinders verschoben werden. Die Treppenelemente sind wiederum verschieblich auf Rollen gelagert.

WO 00/64789 A1 offenbart einen Rundholzstufenschieber, der ebenfalls gegeneinander verschiebbare Treppenelemente hat. Die Verlagerung der Treppenelemente einer ersten Stufenfördereinheit relativ zu den Treppenelementen einer zweiten Stufenfördereinheit erfolgt über eine gemeinsame Antriebseinheit zur Hin- und Herbewegung der Treppenelemente Ober einen Kurbeltrieb und ein Verbindungselement. Die Treppenelemente sind jeweils über eine Schwinge mit einer jeweiligen Lagerachse des Verbindungselementes gekoppelt. Die Lagerachsen und die Schwenkachse des Verbindungselementes liegen in einer Ebene, d.h. auf einer gemeinsamen Verbindungslinie. Das dem Antriebsendbereich eines Treppenelementes gegenüberliegende Ende des Treppenelementes ist gleitend auf einer Achse gelagert, die mit dem angetriebenen Auflager des angrenzenden Treppenelementes der anderen Stufenfördereinheit verbunden ist. Auch hier führt die Gleitlagerung nachteilig zu erhöhtem Verschleiß.

Aus der CA 2 397 401 A1 ist ein Rundholzstufenschieber gemäß dem Oberbegriff des Anspruchs 1 bekannt, der erste und zweite feste Stufeneinheiten aufweist, die in einer Steigung auf einer Halterung montiert sind. Jede Stufeneinheit hat eine Mehrzahl von Steigern und Trittflächen in Reihenanordnung. Der Steiger einer Einheit ist überlappend und verschachtelt mit den Steigern einer anderen Einheit ausgebildet. Die Stufeneinheiten sind mittels Verbindungen auf der Lagerung montiert und bewegen sich in einem Bogen auf dem aufsteigenden Pfad. Die Bögen welsen den gleichen Radius auf und sind zueinander versetzt. Die Stufeneinheiten sind über eine Anlenkung mit einem motorgetriebenen Kurbelarm verbunden. Die Verbindungsachsen sind derart angeordnet, dass die Stufeneinheiten mit 180° Phasenversatz synchronisiert sind.

Aufgabe der Erfindung ist es daher, einen verbesserten Rundholzstufenschieber zu schaffen.

Die Aufgabe wird mit dem Rundholzstufenschieber gemäß Anspruch 1 gelöst.

Die Auflagerung der Treppenelemente erfolgt nicht mit Rollen, sondern über schwenkbar gelagerte Haltearme. Hierdurch wird der Verschleiß vorteilhaft reduziert. Bei der Lagerung der Treppenelemente mit den Haltearmen ist sicherzustellen, dass die Neigung der Treppenelemente im Bewegungsablauf konstant bleibt. Dies gelingt erst durch die erfindungsgemäße Kinematik, bei der die Schwenklagerachse der Schwingen von der Verbindungslinie der Lagerachsen einer Schwinge für die Ankopplung des Verbindungselementes und der Lagerachse dieser Schwinge für das zugeordnete Treppenelement versetzt angeordnet ist.

Im elementaren Unterschied zur der aus der WO 00/64789 A1 bekannten Kinematik werden die Schwingen somit um eine jeweilige feste Schwenklagerachse geschwenkt, während das Verbindungselement selbst frei schwebend ist und keine Schwenkachse aufweist.

Die Treppenelemente werden dadurch um die definierte Schwenklagerachse der zugeordneten Schwinge bei der Hin- und Herbewegung verschwenkt, die im Abstand zur Lagerachse des Treppenelementes mit der Schwinge an einem ebenfalls schwenkbar angeordneten Haltearm so nachgebildet werden kann, dass bei der Hin- und Herbewegung des Treppenelementes die Neigung desselben konstant bleibt.

Die Treppenelemente der ersten Stufenfördereinheit sind vorzugsweise unterhalb seiner Schwinge beweglich an seinem schwenkbar gelagerten Haltearm gelagert, während die Treppenelemente der zweiten Stufenfördeeinheit oberhalb seiner Schwinge beweglich an seinem schwenkbar gelagerten Haltearm gelagert sind.

Grundsätzlich ist es für die erfindungsgemäße Ausgestaltung nicht erforderlich, dass jedes Treppenelement der Stufenförderanordnung auf einer eigenen Schwinge und einem Haltearm gelagert ist. Es ist auch möglich, dass Treppenelemente miteinander beispielsweise über Querträger verbunden sind und mehrere Treppenelemente sich auf einer gemeinsamen Schwinge und einem gemeinsamen Haltearm aufstützen.

So ist es vorteilhaft, wenn weitere Treppenelemente einer jeweiligen Stufenfördereinheit über einen Querträger mit mindestens einem Auflager mindestens eines Treppenelementes auf einer zugeordneten Schwinge verbunden ist.

Besonders vorteilhaft ist es, wenn nur die äußeren Treppenelemente einer jeweiligen Stufenfördereinheit jeweils auf einer Schwinge gelagert sind und die zwischen liegenden Treppenelemente dieser jeweiligen Stufenfördereinheit mit dem Auflager zur Lagerung der äußeren Treppenelemente auf den Schwingen über Querträger verbunden sind. Bei dieser Ausgestaltung ist denkbar, dass nur eines der Verbindungselemente für die Schwingen mit dem Kurbeltrieb einer Antriebseinheit direkt verbunden ist. Das andere Verbindungselement kann zum Beispiel über einen Querträger mit dem mit dem Kurbeltrieb verbundenen Verbindungselement gekoppelt sein.

Besonders vorteilhaft ist es, wenn die Haltearme für die erste und zweite Stufenfördereinheit derart gelagert und ausgerichtet sind, dass sie bei der Hin- und Herbewegung der Treppenelemente eine gegenläufige Bewegung ausführen und die Neigung der Treppenelemente annähernd konstant bleibt.

So können in einer Ruhestellung die Haltearme annähernd parallel zueinander stehen und die Schwingen der ersten und zweiten Stufenfördereinheit annähernd quer zueinander so ausgerichtet sein, dass die jeweiligen Verbindungslinien der Lagerachse der Schwingen für die Ankopplung des gemeinsamen Verbindungselementes für den Kurbeltrieb und der Lagerachse der Schwinge für das zugeordnete Treppenelement in einem Winkel im Bereich von 80 bis 110 Grad annähernd rechtwinklig zueinander stehen.

Die Schwingen sind vorteilhafterweise so ausgerichtet, dass im vollständig ausgelenkten Zustand der Treppenelemente der ersten und zweiten Stufenfördereinheit die jeweiligen Verbindungslinien der Lagerachsen der Schwingen im Winkel im Bereich von 50 Grad bis 70 Grad und bevorzugt von annähernd 60 Grad zueinander stehen.

Die Erfindung wird nachfolgend anhand der beigefügten Zeichnungen beispielhaft näher erläutert. Es zeigen:
- Figur 1: - Querschnittsansicht eines Rundholzstufenschiebers, bei dem eine erste Stufenfördereinheit vollständig nach unten und eine zweite Stufenfördereinheit vollständig nach oben ausgelenkt ist;
- Figur 2: - Rundholzstufenschieber aus Figur 1 in einer Ruhestellung, bei der die Treppenabsätze einer ersten Stufenfördereinheit versetzt zu den Treppenabsätzen einer zweiten Stufenfördereinheit sind;
- Figur 3: - Rundholzstufenschieber aus Figur 1 und 2 im vollständig ausgelenkten Zustand, bei der die erste Stufenfördereinheit vollständig nach oben und die zweite Stufenfördereinheit vollständig nach unten verfahren ist.

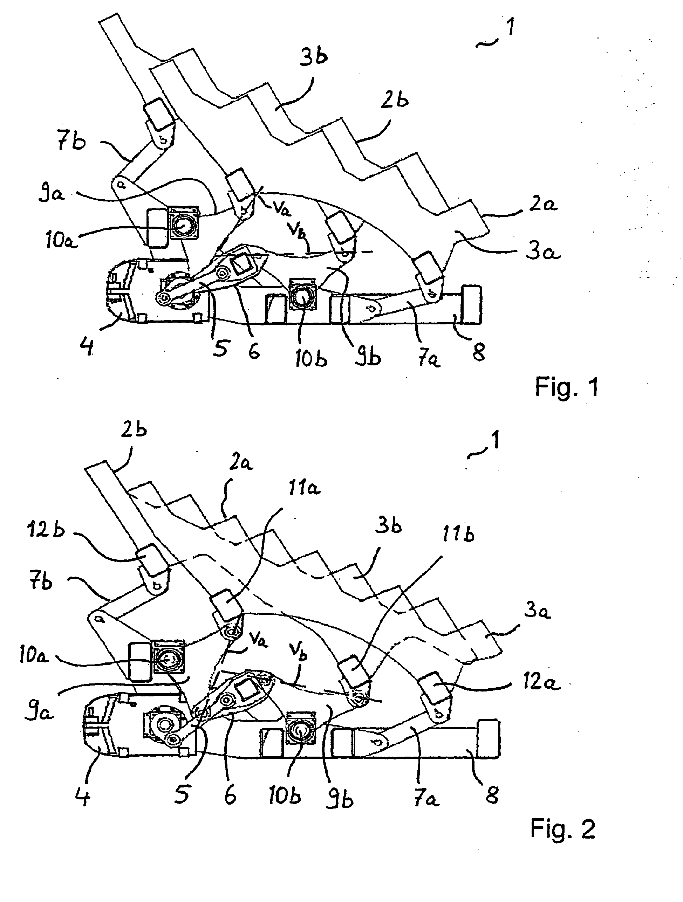

Figur 1 lässt einen Rundholzstufenschieber 1 erkennen, der eine erste Stufenförderanordnung 2a und eine zweite Stufenförderanordnung 2b hat, die parallel zueinander angeordnet sind. Jede Stufenförderanordnung 2a, 2b hat eine Mehrzahl parallel zueinander angeordnete Treppenelemente 3a, 3b mit einer Treppenabsätze aufweisenden Rundholzaufnahmefläche. In die Treppenabsätze der Treppenelemente 3a, 3b, d.h. in die Stufen, wird Rundholz (nicht dargestellt) quer eingelegt und durch Relativbewegung der Treppenelemente 3a, 3b der ersten und zweiten Stufenförderanordnung 2a, 2b zueinander von rechts unten nach links oben quer zur Längsachse des Rundholzes befördert. Bei der Beförderung kann das Rundholz zudem vereinzelt werden.

Der Rundholzstufenschieber 1 hat weiterhin eine Antriebseinheit 4, die über einen Kurbeltrieb 5 mit einem Verbindungselement 6 gekoppelt ist. Der Kurbeltrieb 5 besteht in an sich üblicher Weise aus einer Kurbelwelle und einer Pleuelstange, die in einem Zapfen der Kurbelwelle aufgenommen ist. Die Pleuelstange ist an ihrem anderen Ende mit einem Zapfen an das zugeordnete Verbindungselement angelenkt.

Es ist weiterhin erkennbar, dass das untere Ende des Treppenelementes 3a der ersten Stufenförderanordnung 2a mit einem Haltearm 7a verbunden ist, der schwenkbar auf einer Basisplattform 8 des Rundholzstufenschiebers 1 angelenkt ist. Damit wird das untere Ende des Treppenelements 3a um die Schwenkachse des Haltearms 7a bei der Hin- und Herbewegung verschwenkt.

Weiterhin ist das obere Ende des Treppenelements 3b der zweiten Stufenförderanordnung 2b über einen zweiten Haltearm 7b um die Schwenkachse des zweiten Haltearms 7b herum schwenkbar an der Basisplattform 8 gelagert.

Das jeweils andere Ende der Treppenelemente 3a, 3b ist auf einer Schwinge 9a für die erste Stufenförderanordnung 2a und 9b für die zweite Stufenförderanordnung 2b gelagert. Die Schwingen 9a, 9b sind jeweils um eine Schwenklagerachse 10a, 10b herum verschwenkbar, so dass durch die Schwenkachse des ersten Haltearms 7a und die Schwenklagerachse 10a für die Schwinge 9a des Treppenelements 3a der ersten Stufenförderanordnung 2a der Bewegungsfreiheitsgrad für das Treppenelement 3a festgelegt ist. Der Bewegungsfreiheitsgrad ist dabei so, dass bei der Hin- und Herbewegung des Treppenelements 3a die Neigung des Treppenelements 3a annähernd konstant bleibt.

Die Kinematik des Rundholzstufenschiebers 1 wird dadurch bestimmt, dass die Schwingen 9a, 9b miteinander über das Verbindungselement 6 verbunden sind, das frei schwebend ist und keine eigene Lagerachse hat. Vielmehr ist das erste Ende des Verbindungselementes 6 mit der ersten Schwinge 9a der ersten Stufenförderanordnung 2a und das zweite, dem ersten Ende gegenüberliegende Ende des Verbindungselementes 6 mit der zweiten Schwinge 9b der zweiten Stufenförderanordnung 2b über einen Zapfen verbunden. Dabei ist die Schwenklagerachse 10a, 10b der jeweiligen Schwinge 9a, 9b um die Verbindungslinie Va der Lagerachsen einer Schwinge 9 für die Ankopplung des Verbindungselementes 6 und der Lagerachse dieser Schwinge 9 für das zugeordnete Treppenelement 3 versetzt angeordnet.

Aus der Figur 1 ist erkennbar, dass in dem vollständig ausgelenkten Zustand der Treppenelemente 3a, 3b die Verbindungslinie Va für die Schwinge 9a der ersten Stufenförderanordnung 2a im Winkel von annähernd 60 Grad zur Verbindungslinie Vb der Lagerachsen der Schwinge 9b der zweiten Stufenförderanordnung 2b steht.

Figur 2 zeigt den Rundholzstufenschieber 1 aus Figur 1 im Ruhezustand, bei dem die Treppenabsätze der Treppenelemente 3a, 3b der ersten und zweiten Stufenförderanordnung 2a, 2b zueinander versetzt sind. Die Rundholzaufnahmeflächen der beiden Treppenelemente 3a, 3b liegen etwa auf einer Ebene.

Es ist erkennbar, dass die Verbindungslinien Va, Vb der Lagerachsen der Schwingen 9a, 9b für die Ankopplung des gemeinsamen Verbindungselementes 6 und des jeweiligen Treppenelementes 3a, 3b annähernd rechtwinklig zueinander stehen.

Weiterhin ist zu erkennen, dass die Trägerelemente 3a der ersten Stufenfördereinheit 2a über einen Querträger 11a miteinander verbunden und auf der Schwinge 9a aufgelagert sind. In entsprechender Weise ist auch ein Querträger 12a am Auflager für den Haltearm 7a vorgesehen.

Die Treppenelemente 3b der zweiten Stufenförderanordnung 2b sind ebenfalls über Querträger 11 b, 12b in entsprechender Weise miteinander verbunden.

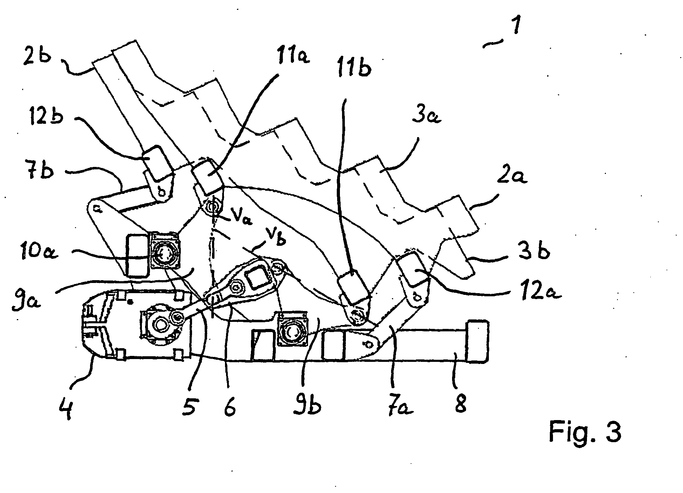

Die Figur 3 lässt den Rundholzstufenschieber 1 in der Position erkennen, in der die Treppenelemente 3a, 3b vollständig ausgelenkt sind. Dabei sind die ersten Treppenelemente 3a vollständig nach links oben und die zweiten Treppenelemente 3b vollständig nach rechts unten verfahren, so dass die durch die Treppenelemente 3a gebildete Rundholzaufnahmefläche oberhalb von der durch die Treppenelemente 3b gebildete Rundholzaufnahmefläche liegt.

Es ist weiterhin erkennbar, dass die Verbindungslinien Va, Vb der Lagerachsen der Schwingen 9a, 9b im Winkel von etwa 60 Grad zueinander stehen.

Durch diese Hin- und Herbewegung der Treppenelemente 3a, 3b relativ zueinander und die dabei bewirkte Verlagerung der jeweiligen Rundholzaufnahmeflächen bzw. Treppenstufen der Treppenelemente 3a, 3b zueinander wird erreicht, dass auf einem Treppenabsatz gelagertes Rundholz vereinzelt und auf den Treppenabsätzen der Treppenelemente 3a, 3b nach oben befördert wird.

Für die Anwendung des Rundholzstufenschiebers 1 ist es dabei allerdings prinzipiell unerheblich, ob die Treppenelemente 3 wie dargestellt geneigt sind oder nicht.

## Patentansprüche

1. Rundholzstufenschieber (1) mit:
- einer Basisplattform (8)
- einer ersten Stufenförderanordnung (2a), die eine Mehrzahl parallel zueinander angeordnete Treppenelemente (3a) mit einer Treppenabsätze aufweisenden Rundholzaufnahmefläche hat,
- einer zweiten Stufenförderanordnung (2b), die eine Mehrzahl parallel zueinander angeordnete Treppenelemente (3b) mit einer Treppenabsätze aufweisenden Rundholzaufnahmefläche hat, wobei die erste und zweite Stufenförderanordnung (2a, 2b) relativ zueinander beweglich gelagert sind,
- einer mit den Treppenelementen (3a, 3b) der Stufenförderanordnungen (2a, 2b) über einen Kurbeltrieb (5) gekoppelten Antriebseinheit (4) zur Hin- und Herbewegung der Treppenelemente (3a, 3b) derart, dass auf den Treppenabsätzen parallel angeordneter Treppenelemente (3a, 3b) liegendes Rundholz quer zur Längsachse des Rundholzes befördert wird,
wobei die Treppenelemente (3a, 3b) der ersten und zweiten Stufenförderanordnung (2a, 2b) jeweils an einer Schwinge (9a, 9b) um eine Lagerachse schwenkbar gelagert sind und an einem Haltearm (7a, 7b) um eine Lagerachse im Abstand zu der Lagerachse für die Schwinge (9a, 9b) schwenkbar gelagert sind,
wobei die Schwinge (9a, 9b) und die Haltearme (7a, 7b) jeweils auf der Basisplattform (8) um eine Schwenklagerachse schwenkbar angelenkt sind, **dadurch gekennzeichnet, dass** die Schwingen (9a, 9b) miteinander über ein Verbindungselement (6) verbunden sind, wobei das Verbindungselement (6) nur mit dem Kurbeltrieb (5) der Antriebseinheit (4) und mit den Schwingen (9a, 9b) jeweils um eine Lagerachse schwenkbar gekoppelt ist, und dass die Schwenklagerachse (10a, 10b) der Schwingen (9a, 9b) von der Verbindungslinie (Va, Vb) der Lagerachse einer Schwinge für die Ankopplung des Verbindungselements (6) und der Lagerachse dieser Schwinge (9a, 9b) für das zugeordnete Treppenelement (3) versetzt angeordnet ist.

2. Rundholzstufenschieber (1) nach Anspruch 1, **dadurch gekennzeichnet, dass** Treppenelemente (3a) der ersten Stufenförderanordnung (2a) unterhalb seiner Schwinge (9a) beweglich an seinem schwenkbar gelagerten Haltearm (7a) gelagert sind und Treppenelemente (3b) der zweiten Stufenförderanordnung (2b) oberhalb seiner Schwinge (9b) beweglich an seinem schwenkbar gelagerten Haltearm (7b) gelagert sind.

3. Rundholzstufenschieber (1) nach Anspruch 2, **dadurch gekennzeichnet, dass** die Haltearme (7a, 7b) für die erste und zweite Stufenförderanordnung (2a, 2b) derart gelagert und ausgerichtet sind, dass sie bei der Hin- und Herbewegung der Treppenelemente (3a, 3b) eine gegenläufige Bewegung ausführen und die Neigung der Treppenelemente (3a, 3b) annähernd konstant bleibt.

4. Rundholzstufenschieber (1) nach Anspruch 3, **dadurch gekennzeichnet, dass** in einer Ruhesteilung die Haltearme (7a, 7b) annähernd parallel zueinander stehen und die Schwingen (9a, 9b) der ersten und zweiten Stufenförderanordnung (2a, 2b) annähernd quer zueinander so ausgerichtet sind, dass die jeweiligen Verbindungslinien der Lagerachse der Schwingen (9a, 9b) für die Ankopplung des gemeinsamen Verbindungselementes (6) für den Kurbeltrieb (5) und der Lagerachsen der Schwinge (9a, 9b) für das zugeordnete Treppenelement (3a, 3b) in einem Winkel im Bereich von 80 bis 110 Grad annähernd rechtwinklig zueinander stehen.

5. Rundholzstufenschieber (1) nach Anspruch 4, **dadurch gekennzeichnet, dass** die Schwingen (9a, 9b) so ausgerichtet sind, dass die jeweiligen Verbindungslinien (Va, Vb) der Lagerachsen im vollständig ausgelenkten Zustand der Treppenelemente (3a, 3b) der ersten und zweiten Stufenförderanordnung (2a, 2b) im Winkel von dem Bereich 50 bis 70 Grad und bevorzugt annähernd 60 Grad zueinander stehen.

6. Rundholzstufenschieber (1) nach einem der vorhergehenden Ansprüche, **dadurch gekennzeichnet, dass** weitere Treppenelemente (3) einer jeweiligen Stufenförderanordnung (2) über einen Querträger mit mindestens einem Auflager mindestens eines Treppenelements (3) auf einer zugeordneten Schwinge (9) verbunden ist.

7. Rundholzstufenschieber (1) nach Anspruch 6, **dadurch gekennzeichnet, dass** die äußeren Treppenelemente (3) einer jeweiligen Stufenförderanordnung (2) jeweils auf einer Schwinge (9) gelagert sind und die zwischen liegenden Treppenelemente (3) dieser jeweiligen Stufenförderanordnung (2) mit den Auflagern zur Lagerung der äußeren Treppenelemente (3) auf den Schwingen (9) über Querträger verbunden sind.

## Claims

1. Round-timber step feeder (1) comprising:
- a base platform (8),
- a first step-feeding arrangement (2a) which has a plurality of staircase elements (3a), which are arranged parallel to one another, with a round-timber receiving surface having staircase landings,
- a second step-feeding arrangement (2b) which has a plurality of staircase elements (3b), which are arranged parallel to one another, with a round-timber receiving surface having staircase landings, wherein the first and second step-feeding arrangements (2a, 2b) are mounted so as to be movable relative to one another,
- a drive unit (4) coupled to the staircase elements (3a, 3b) of the step-feeding arrangements (2a, 2b) via a crank drive (5) and intended for moving the staircase elements (3a, 3b) back and forth in such a way that round timber lying on the staircase landings of staircase elements (3a, 3b) arranged in parallel is conveyed transversely with respect to the longitudinal axis of the round timber,
wherein the staircase elements (3a, 3b) of the first and second step-feeding arrangements (2a, 2b) are in each case mounted on a rocker (9a, 9b) so as to be pivotable about a bearing axis and are mounted on a holding arm (7a, 7b) so as to be pivotable about a bearing axis at a distance from the bearing axis for the rocker (9a, 9b),
wherein the rocker (9a, 9b) and the holding arms (7a, 7b) are in each case articulated on the base platform (8) so as to be pivotable about a pivot bearing axis, **characterized in that** the rockers (9a, 9b) are connected to one another via a connecting element (6), wherein the connecting element (6) is coupled only with the crank drive (5) of the drive unit (4) and with the rockers (9a, 9b) so as to be pivotable in each case about a bearing axis, and **in that** the pivot bearing axis (10a, 10b) of the rockers (9a, 9b) is arranged offset from the connecting line (Va, Vb) of the bearing axis of a rocker for the coupling of the connecting element (6) and the bearing axis of this rocker (9a, 9b) for the associated staircase element (3).

2. Round-timber step feeder (1) according to Claim 1, **characterized in that** staircase elements (3a) of the first step-feeding arrangement (2a) are mounted below its rocker (9a) so as to be movable on its pivotably mounted holding arm (7a), and staircase elements (3b) of the second step-feeding arrangement (2b) are mounted above its rocker (9b) so as to be movable on its pivotably mounted holding arm (7b).

3. Round-timber step feeder (1) according to Claim 2, **characterized in that** the holding arms (7a, 7b) for the first and second step-feeding arrangements (2a, 2b) are mounted and oriented in such a way that, during the back and forth movement of the staircase elements (3a, 3b), they execute an opposed movement and the inclination of the staircase elements (3a, 3b) remains approximately constant.

4. Round-timber step feeder (1) according to Claim 3, **characterized in that**, in a rest position, the holding arms (7a, 7b) are approximately parallel to one another, and the rockers (9a, 9b) of the first and second step-feeding arrangements (2a, 2b) are oriented approximately transversely to one another such that the respective connecting lines of the bearing axis of the rockers (9a, 9b) for coupling the common connecting element (6) for the crank drive (5) and the bearing axes of the rocker (9a, 9b) for the associated staircase element (3a, 3b) are approximately at a right angle to one another at an angle in the range from 80 to 110°.

5. Round-timber step feeder (1) according to Claim 4, **characterized in that** the rockers (9a, 9b) are oriented such that the respective connecting lines (Va, Vb) of the bearing axes in the completely deflected state of the staircase elements (3a, 3b) of the first and second step-feeding arrangements (2a, 2b) are at an angle to one another in the range from 50 to 70° and preferably approximately 60°.

6. Round-timber step feeder (1) according to one of the preceding claims, **characterized in that** further staircase elements (3) of a respective step-feeding arrangement (2) are connected via a crossmember to at least one support of at least one staircase element (3) on an associated rocker (9).

7. Round-timber step feeder (1) according to Claim 6, **characterized in that** the outer staircase elements (3) of a respective step-feeding arrangement (2) are in each case mounted on a rocker (9), and the intermediate staircase elements (3) of this respective step-feeding arrangement (2) are connected to the supports for mounting the outer staircase elements (3) on the rockers (9) via crossmembers.

## Revendications

1. Transporteur pas à pas pour bois rond (1) comprenant :
- une plate-forme formant base (8)
- un premier agencement d'acheminement pas à pas (2a) qui a plusieurs éléments en escalier (3a) agencés parallèlement les uns aux autres ayant une surface de réception de bois rond présentant des décrochements d'escalier,
- un deuxième agencement d'acheminement pas à pas (2b) qui a plusieurs éléments en escalier (3b) agencés parallèlement les uns aux autres ayant une surface de réception de bois rond présentant des décrochements d'escalier, le premier et le deuxième agencement d'acheminement pas à pas (2a, 2b) étant montés mobiles l'un par rapport à l'autre,
- une unité d'entrainement (4) couplée avec les éléments en escalier (3a, 3b) de l'agencement d'acheminement pas à pas (2a, 2b) par l'intermédiaire d'une transmission à manivelle (5), pour le mouvement en va-et-vient des éléments en escalier (3a, 3b), de sorte que du bois rond allongé sur les décrochements d'escalier d'éléments en escalier (3a, 3b) agencés parallèles soit acheminé transversalement à l'axe longitudinal du bois rond,
les éléments en escalier (3a, 3b) du premier et du deuxième agencement d'acheminement pas à pas (2a, 2b) étant respectivement montés pivotants sur un bras oscillant (9a, 9b) autour d'un axe de palier, et sur un bras de support (7a, 7b), autour d'un axe de palier à distance de l'axe de palier pour le bras oscillant (9a, 9b),
les bras oscillants (9a, 9b) et les bras de support (7a, 7b) étant articulés pivotants respectivement sur la plate-forme formant base (8) autour d'un axe de palier de pivotement, **caractérisé en ce que** les bras oscillants (9a, 9b) sont reliés entre eux par l'intermédiaire d'un élément de liaison (6), l'élément de liaison (6) étant couplé pivotant autour d'un axe de palier respectif seulement avec la transmission à manivelle (5) de l'unité d'entraînement (4) et avec les bras oscillants (9a, 9b), et **en ce que** l'axe de palier à pivotement (10a, 10b) des bras oscillants (9a, 9b) est agencé décalé par rapport à la ligne de liaison (Va, Vb) de l'axe de palier d'un bras oscillant pour le couplage de l'élément de liaison (6) et de l'axe de palier de ce bras oscillant (9a, 9b) pour l'élément en escalier (3) associé.

2. Transporteur pas à pas pour bois rond (1) selon la revendication 1, **caractérisé en ce que** des éléments en escalier (3a) du premier agencement d'acheminement pas à pas (2a) sont montés mobiles sur son bras de support (7a) monté pivotant, en-dessous de son bras oscillant (9a), et des éléments en escalier (3b) du deuxième agencement d'acheminement pas à pas (2b) sont montés mobiles sur son bras de support (7b) monté pivotant, au-dessus de son bras oscillant (9b).

3. Transporteur pas à pas pour bois rond (1) selon la revendication 2, **caractérisé en ce que** les bras de support (7a, 7b) pour le premier et le deuxième agencement d'acheminement pas à pas (2a, 2b) sont montés et orientés de sorte que lors du mouvement en va-et-vient des éléments en escalier (3a, 3b), ils accomplissent un déplacement opposé et l'inclinaison des éléments en escalier (3a, 3b) reste approximativement constante.

4. Transporteur pas à pas pour bois rond (1) selon la revendication 3, **caractérisé en ce que** les bras de support (7a, 7b) se tiennent approximativement parallèles l'un par rapport à l'autre dans une position de repos et les bras oscillants (9a, 9b) du premier et du deuxième agencement d'acheminement pas à pas (2a, 2b) sont orientés approximativement transversaux l'un à l'autre, de sorte que les lignes de liaison respectives des axes de palier des bras oscillants (9a, 9b) pour le couplage de l'élément de liaison (6) commun pour la transmission à manivelle (5) et des axes de palier des bras oscillants (9a, 9b) pour l'élément en escalier (3a, 3b) associé, soient approximativement perpendiculaires l'une à l'autre, selon un angle de l'ordre de 80 à 110 degrés.

5. Transporteur pas à pas pour bois rond (1) selon la revendication 4, **caractérisé en ce que** les bras oscillants (9a, 9b) sont orientés de sorte que les lignes de liaison (Va, Vb) respectives des axes de palier, à l'état entièrement décalé des éléments en escalier (3a, 3b) du premier et du deuxième agencement d'acheminement pas à pas (2a, 2b), forment l'une avec à l'autre un angle de l'ordre de 50 à 70 degrés et de préférence approximativement 60 degrés.

6. Transporteur pas à pas pour bois rond (1) selon l'une quelconque des revendications précédentes, **caractérisé en ce que** d'autres éléments en escalier (3) d'un agencement d'acheminement pas à pas (2) respectif est relié par l'intermédiaire d'une traverse, à au moins un support d'au moins un élément en escalier (3) sur un bras oscillant associé (9).

7. Transporteur pas à pas pour bois rond (1) selon la revendication 6, **caractérisé en ce que** les éléments en escalier (3) externes d'un agencement d'acheminement pas à pas (2) respectif sont montés chacun sur un bras oscillant (9) et les éléments en escalier (3) de cet agencement d'acheminement pas à pas (2) respectif, qui se trouvant entre sont reliés par l'intermédiaire de traverses aux supports pour le montage des éléments en escalier (3) externes, sur les bras oscillants (9).
